# EUROPEAN PATENT APPLICATION

(11) **EP 4 765 470 A1**
(43) Date of publication of application: **24.06.2026**
(21) Application number: 24882771.9
(22) Date of filing: 22.10.2024
(51) Int. Cl.: H01M 50/691, H01M 10/6557, H01M 10/6551, H01M 50/289, H01M 10/613, H01M 50/271, H01M 50/211

(54) **BATTERY MODULE AND BATTERY PACK**

(30) Priority: 23.10.2023 KR 20230142494
(71) Applicant: LG Energy Solution, Ltd., Seoul 07335 (KR)
(72) Inventor: LEE, Bum Hee, Daejeon 34122 (KR); KIM, Ui Seong, Daejeon 34122 (KR); NOH, Tae Heon, Daejeon 34122 (KR)
(74) Representative: Plasseraud IP
(86) International application number: PCT/KR2024/016074
(87) International publication number: WO 2025/089744

(57) **Abstract**

A battery pack according to the present invention comprises: a plurality of secondary batteries which include battery cases having electrode leads and lead sealing portions corresponding to the electrode leads, and which face each other such that the lead sealing portions are arranged in one direction; cooling plates positioned between the plurality of secondary batteries; and a pack case having an accommodation space for accommodating the plurality of secondary batteries, the pack case having drains that are adjacent to the lead sealing portions and are recessed in the direction of moving farther away from the lead sealing portions.

## Description

### TECHNICAL FIELD

### CROSS-REFERENCE TO RELATED APPLICATIONS

The present application claims priority to Korean Patent Application No. 10-2023-0142494 filed on October 23, 2023 in the Republic of Korea, the disclosure of which is incorporated herein by reference.

### TECHNICAL FIELD

The present disclosure relates to a battery module and a battery pack. More particularly, the present disclosure relates to an improved battery module and battery pack to prevent the spread of thermal runaway in a situation in which the thermal runaway occurred in a secondary battery.

### BACKGROUND ART

With the technology development and growing demand for electric vehicles and mobile devices, the demand for secondary batteries as an energy source is increasing. As opposed to primary batteries that can only be used once, secondary batteries can be reused through charging. A secondary battery includes a positive electrode and a negative electrode. When oxidation of a metal occurs at the positive electrode, electricity is produced by movement of electrons released from the metal. The oxidized metal at the positive electrode moves to the negative electrode through an electrolyte and reduction occurs at the negative electrode.

To manufacture the secondary battery, first, an electrode active material slurry is applied to a positive current collector and a negative current collector to manufacture the positive electrode and the negative electrode, and the positive electrode and the negative electrode are stacked on both sides of a separator to form an electrode assembly. Additionally, the electrode assembly is received in a battery case, followed by electrolyte injection and sealing.

Secondary batteries are classified into a pouch type and a can type according to the material of the case accommodating the electrode assembly. The pouch-type secondary battery is formed by accommodating the electrode assembly in the pouch made of flexible polymer. Additionally, the can-type secondary battery is formed by accommodating the electrode assembly in the case made of metal or plastic.

The pouch, i.e., the battery case of the pouch-type secondary battery is manufactured by pressing a pouch film having flexibility to form a cup portion. Additionally, when the cup portion is formed, the electrode assembly is received in an electrode accommodation space of the cup portion, and the pouch is sealed by joining the edge of the cup portion to form a side portion.

When an unintentional side reaction occurs in the secondary battery, thermal runaway leading to an increased temperature may occur. When thermal runaway occurs in the secondary battery, the temperature of the secondary battery rapidly increases, causing a problem with electrical energy production of the secondary battery.

Further, from the perspective of a battery module or a battery pack including a plurality of secondary batteries, when thermal runaway occurs in any one secondary battery, heat is transferred to other secondary battery adjacent to the secondary battery in which the thermal runaway occurred, and the thermal runaway may propagate to all the adjacent secondary batteries.

When the thermal runaway occurs in the secondary battery, the electrolyte located in the secondary battery may evaporate and be released to the outside of the secondary battery, causing damage to the battery case, and the electrolyte in gas phase has moved to the outside of the secondary battery may be liquefied. Because the electrolyte in liquid phase may enable passage of electricity, when the electrolyte is near the secondary battery, it may allow the flow of electricity produced from the secondary battery, which may affect the secondary battery or any component located near the secondary battery, and there is a need to move the liquefied electrolyte away from the secondary battery.

### SUMMARY

### TECHNICAL PROBLEM

The present disclosure is designed to solve the above-described problems, and therefore the present disclosure is directed to providing a battery module and a battery pack for preventing the heat transfer to an adjacent secondary battery when thermal runaway occurs in a secondary battery.

The present disclosure is further directed to providing a battery module and a battery pack configured to collect a liquid leaking from a secondary battery in one place when thermal runaway occurs in the secondary battery.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A battery pack according to an embodiment of the present disclosure includes a plurality of secondary batteries including an electrode lead and a battery case including a lead sealing portion corresponding to the electrode lead, the plurality of secondary batteries arranged facing each other such that the lead sealing portions are arranged in a direction, a cooling plate located between the plurality of secondary batteries, and a pack case having an accommodation space for accommodating the plurality of secondary batteries and a drainage channel adjacent to the lead sealing portions and recessed in a direction facing away from the lead sealing portions.

The drainage channel may be extended along the direction in which the lead sealing portions are arranged.

The pack case may have a drainage hole adjacent to an end portion of the drainage channel.

The pack case may include a battery support portion protruded toward the secondary batteries to support the plurality of secondary batteries in a gravity direction to place the lead sealing portions spaced apart from the drainage channel.

The drainage channel may include a plurality of drainage channels corresponding to the lead sealing portions each disposed at each of opposite sides.

The battery pack may further include a thermal resin located between the cooling plate and the secondary batteries.

The cooling plate may have a cooling channel in which a cooling medium circulates.

The cooling channel may be extended along a direction in which the cooling plate is extended.

The cooling plate may include a plurality of cooling plates along a direction in which the plurality of secondary batteries is arranged.

The battery pack may further include a main cooling channel connected to the cooling channel to supply the cooling medium to the cooling channel.

The main cooling channel may be extended along a direction in which the plurality of cooling plates is arranged.

The plurality of cooling plates may have a one-to-one correspondence with the plurality of secondary batteries.

The plurality of cooling plates may be stacked with the plurality of secondary batteries at 2:1 in an alternating manner.

The pack case may include a division frame to divide the accommodation space into a first accommodation space and a second accommodation space, and the drainage channel may include a first drainage channel located in the first accommodation space and spaced apart from the division frame and a second drainage channel located in the second accommodation space and spaced apart from the division frame.

The battery pack may include a pack top plate located on the plurality of secondary batteries, and may further include a cover member to cover the electrode leads to prevent the electrode leads from contacting the pack top plate.

A battery module according to an embodiment of the present disclosure includes a plurality of secondary batteries including an electrode lead and a battery case including a lead sealing portion corresponding to the electrode lead, the plurality of secondary batteries arranged facing each other such that the lead sealing portions are arranged in a direction, and a module case having a battery accommodation space for accommodating the secondary batteries, and the module case includes a drainage channel adjacent to the lead sealing portions, recessed in a direction facing away from the lead sealing portions and extended along the direction in which the lead sealing portions are arranged and a drainage hole adjacent to an end portion of the drainage channel.

The module case may include a battery support portion protruded toward the secondary batteries to support the plurality of secondary batteries in a gravity direction to place the plurality of secondary batteries spaced apart from the drainage channel.

The battery module may further include a cooling plate located between the plurality of secondary batteries.

The battery module may further include a thermal resin located between the cooling plate and the secondary batteries.

A battery pack according to an embodiment of the present disclosure includes a plurality of secondary batteries including an electrode lead and a battery case including a lead sealing portion corresponding to the electrode lead, the plurality of secondary batteries arranged facing each other such that the lead sealing portions are arranged in a direction, and a pack case having an accommodation space for accommodating the plurality of secondary batteries and a drainage channel adjacent to the lead sealing portions and recessed in a direction facing away from the lead sealing portions.

### ADVANTAGEOUS EFFECTS

As the battery module and the battery pack according to the present disclosure include the cooling plate between the plurality of secondary batteries, it may be possible to prevent the heat transfer to the adjacent secondary battery when thermal runaway occurs in any one secondary battery.

As the battery module and the battery pack according to the present disclosure have the drainage channel adjacent to the lead sealing portion of the battery case and recessed in a direction facing away from the lead sealing portion, it may be possible to collect the liquid leaking from the secondary battery in one place when thermal runaway occurs in the secondary battery.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is an exploded view showing a secondary battery in a first embodiment of the present disclosure.
FIG. 2 is a perspective view showing the assembled completed secondary battery shown in FIG. 1.
FIG. 3 is a perspective view showing a battery pack including the secondary battery shown in FIG. 1.
FIG. 4 is an exploded view of the battery pack shown in FIG. 3.
FIG. 5 is an enlarged side view of a cooling plate shown in FIG. 4.
FIG. 6 is a cross-sectional view of the battery pack shown in FIG. 3, taken along the line VI-VI'.
FIG. 7 is a conceptual diagram showing a situation in which thermal runaway occurred in a secondary battery of a battery stack shown in FIG. 6.
FIG. 8 is a cross-sectional view of the battery pack shown in FIG. 3, taken along the line VIII-VIII'.
FIG. 9 is a cross-sectional view of the battery pack shown in FIG. 3, taken along the line IX-IX'.
FIG. 10 is a cross-sectional view showing a battery pack according to a second embodiment of the present disclosure.
FIG. 11 is a conceptual diagram showing a situation in which thermal runaway occurred in a secondary battery of a battery stack according to a third embodiment of the present disclosure.
FIG. 12 is a conceptual diagram showing a situation in which thermal runaway occurred in a secondary battery of a battery stack according to a fourth embodiment of the present disclosure.
FIG. 13 is a top view of a battery pack according to a fifth embodiment of the present disclosure.
FIG. 14 is a top view of a battery pack according to a sixth embodiment of the present disclosure.
FIG. 15 is an exploded view of a battery module according to a seventh embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When an (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and another element may be present between them.

Meanwhile, the terms "up-down direction", "lower", and "front-rear direction" as used herein are defined on the basis of the drawings, and the shape and location of each element is not limited by these terms.

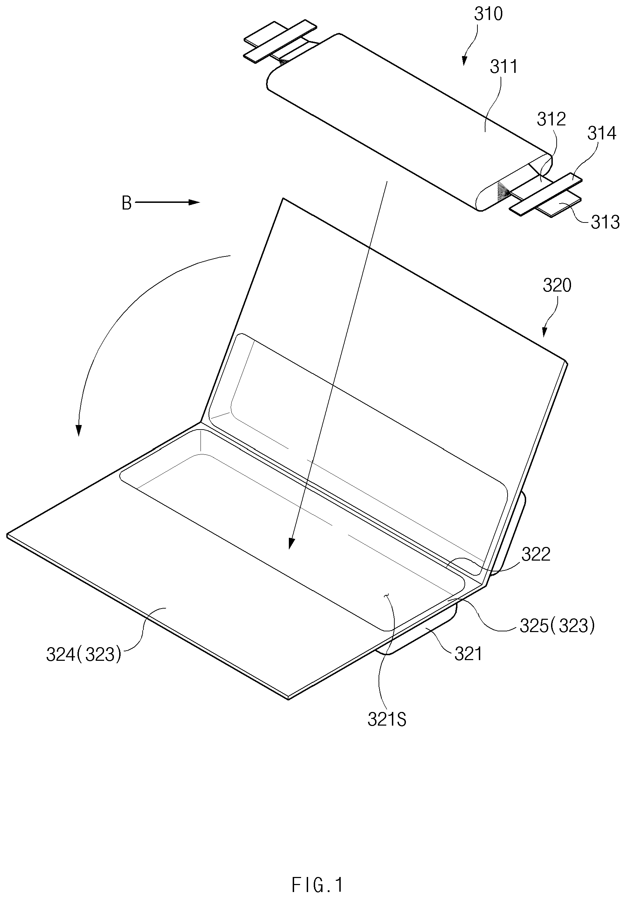

Specifically, as shown in FIG. 1, a direction in which an electrode assembly 310 moves to be accommodated in an electrode 311 accommodation space 100S may be defined as left, a direction in which an electrode lead 313 is extended may be defined as front, and on the basis of the definition, upper, rear, left and right may be defined.

Alternatively, +X direction may be defined as upper, +Y direction may be defined as front, and +Z direction may be defined as right, and on the basis of the definition, lower, rear and left may be defined.

Hereinafter, the embodiments according to the present disclosure will be described in detail with reference to the accompanying drawings.

### First embodiment

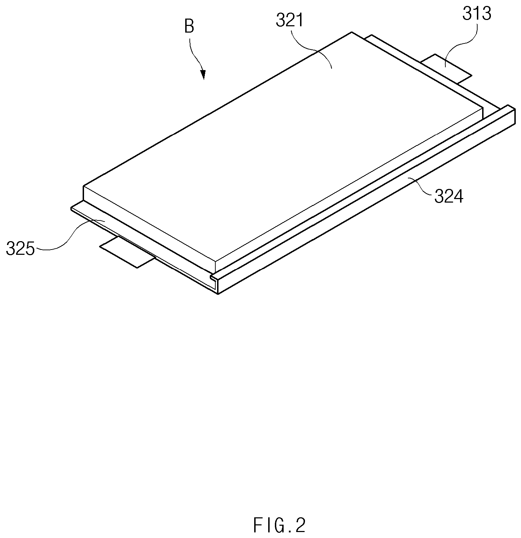

FIG. 1 is an exploded view showing a secondary battery B in a first embodiment of the present disclosure. FIG. 2 is a perspective view showing the assembled completed secondary battery B shown in FIG. 1.

Referring to FIGS. 1 and 2, the secondary battery B according to the first embodiment of the present disclosure will be described.

As shown in FIG. 1, the secondary battery B may include the electrode assembly 310. The electrode assembly 310 may be formed by stacking the electrode 311 (not shown) and a separator (not shown) in an alternating manner. First, a slurry including an electrode 311 active material, a binder and a plasticizer may be applied to a positive current collector and a negative current collector to manufacture the positive and negative electrodes 311, respectively. Additionally, the separators may be stacked between the electrodes 311 to form the electrode assembly 310, the electrode assembly 310 may be inserted into a battery case 320, an electrolyte (not shown) may be injected into the battery case 320 and the battery case 320 may be sealed.

Specifically, the electrode assembly 310 may include the two types of electrodes 311, the positive electrode and the negative electrode, and the separator interposed between the electrodes 311 to insulate them from each other. The electrode assembly 310 may come in a stack type, a jellyroll type, a stack and folding type and so on, according to the way of stacking the positive electrode, the negative electrode and the separator. The two types of electrodes 311, that is, the positive electrode and the negative electrode may have a structure in which the active material slurry is applied to the metal foil or mesh-type electrode 311 current collector including aluminum and copper, respectively. The slurry may be generally formed by mixing the particulate active material, an auxiliary conductive material, the binder and the plasticizer with an addition of a solvent. The solvent in the slurry may be removed in the subsequent process.

More specifically, the positive electrode may include a positive electrode material having strong oxidizing power to provide electrons. For example, the positive electrode material may include lithium ion-transition metal-oxygen. The transition metal may include nickel, cobalt or manganese. The negative electrode may include a negative electrode material having strong reducing power to accept electrons. For example, the negative electrode material may include graphite. When the secondary battery B is charged and discharged, electrons may migrate with movement of lithium ions. In this case, the lithium ions may move through the electrolyte located between the positive electrode and the negative electrode, and the electrons may move through a wire connecting the positive electrode to the negative electrode.

For example, during charging of the secondary battery B, the lithium ions at the positive electrode may move to the graphite at the negative electrode, and the negative electrode may accept electrons, transforming into lithium, then the lithium may move into each layer of the graphite. Because the graphite has a structure including the plurality of layers, even though the lithium is stored in the graphite, protrusions formed in a protruding shape on the negative electrode, i.e., dendrites may not occur. During discharging of the secondary battery B, the lithium in the graphite at the negative electrode may release electrons to form lithium ions, and the lithium ions may move to the positive electrode through the electrolyte. The lithium ions moving to the positive electrode may bond with the transition metal. Because the transition metal may exist in an ionic state with a plurality of charges, when the transition metal bonds with the lithium ions, the transition metal may have different charges but may be kept in the ionic state, thereby maintaining structural stability. However, this is an example, and the ions moving during repeated charging and discharging may include sodium ions or any other materials, not lithium ions. Further, the negative electrode material may include any other materials than graphite. In addition, the electrolyte may be in a liquid state, but the electrolyte in a solid state may be used in the secondary battery B of the present disclosure.

As shown in FIG. 1, the electrode assembly 310 may include an electrode tab. The electrode tab may be connected to each of the positive electrode and the negative electrode of the electrode assembly 310, and be protruded outward from the electrode assembly 310 to become a path of movement of electrons between the inside and outside of the electrode assembly 310. Each of the plurality of electrode tabs may be protruded in each different direction of the electrode assembly 310 but is not limited thereto, and each of the plurality of electrode tabs may be protruded parallel to each other in the same direction or may be protruded in various directions. The electrode assembly 310 may include the electrode lead 313 connected to the electrode tab to supply electricity to the outside of the secondary battery B. The electrode lead 313 may be connected to the electrode tab by spot welding.

The electrode assembly 310 may include an insulation portion 314 surrounding a part of the electrode lead 313. The insulation portion 314 may be located between two parts of the battery case 320 to insulate the electrode lead 313 from the battery case 320.

The electrode tab configured to have positive polarity may be referred to as a positive tab, and the electrode tab configured to have negative polarity may be referred to as a negative tab. The electrode lead 313 configured to have positive polarity may be referred to as a positive lead, and the electrode lead 313 configured to have negative polarity may be referred to as a negative lead. One end of the electrode lead 313 may be connected to the electrode tab, and the other end may be protruded outward from the battery case 320. That is, the electrode lead 313 may include the positive lead connected, at one end, to the positive tab and extended in the direction in which the positive tab is protruded, and the negative lead connected, at one end, to the negative tab and extended in the direction in which the negative tab is protruded. Meanwhile, the other end of the positive lead and the negative lead may be protruded outward from the battery case 320. Accordingly, the positive lead and the negative lead may supply electricity produced inside of the electrode assembly 310 to the outside. Additionally, each of the positive tab and the negative tab may be extended toward different directions.

The materials of the positive lead and the negative lead may be different from each other. The positive lead may be made of aluminum that is the same as the positive current collector, and the negative lead may be made of copper or nickel coated copper that is the same as the negative current collector. Additionally, the part of the electrode lead 313 protruded outward from the battery case 320 may act as a terminal portion to electrically connect to an external terminal 316.

The battery case 320 may be made of a material having high flexibility to receive the electrode assembly 310 therein. When drawing a pouch film having flexibility using a punch (not shown), a part of the pouch film may be stretched to form the cup portion 321 having the pocket-shaped electrode 311 accommodation space 100S, thereby manufacturing the battery case 320. The battery case 320 may accommodate the electrode assembly 310 such that the part of the electrode lead 313 is exposed and may be sealed.

For reference, the pouch film as used herein may be a word indicating an element in progress before completion of the battery case 320, and accordingly, the word indicated by the pouch film may have the meaning of the battery case 320 according to the context. Further, the battery case 320 may refer to the completed battery case 320, and may refer to the battery case 320 before completion. The meaning of the battery case 320 may be differently interpreted depending on the context.

When forming the cup portion 321 in the pouch film, only one cup portion 321 may be formed in one pouch film, but the present disclosure is not limited thereto, and two cup portions 321 may be formed in one pouch film by drawing them adjacent to each other. Thus, as shown in FIG. 1, the two adjacent cup portions 321 may be formed. Each cup portion 321 may have the same depth, but is not limited thereto, and the depth of each cup portion 321 may be different from each other. After the electrode assembly 310 is received in one cup portion 321, the battery case 320 may be folded with an axis as the center such that the cup portion 321 and the other cup portion 32 face each other. Accordingly, the other cup portion 321 may accommodate the electrode assembly 310 at the upper side. As the two cup portions 321 accommodate one electrode assembly 310, they may accommodate the thicker electrode assembly 310 than a single cup portion 321.

In addition, in the present disclosure, the pouch film may refer to a film before the battery case 320 is formed, and in the drawings, the reference numeral of the pouch film may be the same as the reference numeral of the battery case 320.

Additionally, the battery case 320 may be folded to form a folding portion 322 connecting the two cup portions 321, and as the folding portion 322 is formed by the folding and integrally connected, when the sealing process is performed later, the number of sides to seal may be reduced. Accordingly, it may be possible to speed up the process, and reduce the number of sealing processes. In particular, when the cross section of the cup portion 321 is close to a rectangular shape, the battery case 320 may be sealed by sealing the three sides of the battery case 320 having the folding portion 322. However, when each of the two cup portions 321 is formed in each pouch film, in a state that the pouch films are located such that each cup portion 321 faces each other without a folded part, the edge of the battery case 320 may be sealed. In this case, when the cross section of the cup portion 321 is close to a rectangular shape, the battery case 320 may be sealed by sealing the four sides of the battery case 320. In the present disclosure, for convenience of description, the description is made on the basis of the battery case 320 including the folding portion 322. However, the aspect of the present disclosure may be applied to the battery case 320 that does not include the folding portion 322.

When the electrode lead 313 is connected to the electrode tab of the electrode assembly 310, and the insulation portion 314 is formed at a part of the electrode lead 313, the electrode assembly 310 may be accommodated in the electrode 311 accommodation space 100S of the cup portion 321, and the other cup portion 321 may cover the electrode assembly 310. Subsequently, a part of a side portion 323 extended from the cup portion 321 on the other side and the side where the folding portion 322 is located may be sealed, and the electrolyte may be injected into the electrode 311 accommodation space 100S through the unsealed side portion 323, and after the injection of the electrolyte, the unsealed side portion 323 may be sealed.

The pouch film that forms the battery case 320 may include a plurality of layers. The following description is made based on the pouch film, but may be equally applied to the battery case 320 formed by the pouch film.

The pouch film may include a surface protective layer (not shown), a sealant layer (not shown) and a moisture barrier layer (not shown). The pouch film may further include a stretch assisting layer located on the moisture barrier layer.

The sealant layer may be made of a first polymer, formed in an innermost layer and come into direct contact with the electrode assembly 310. Here, the innermost layer may be the last layer in the direction toward the electrode assembly 310 on the basis of the moisture barrier layer. The sealant layer may have insulation because it directly contacts the electrode assembly 310, and may have corrosion resistance because it contacts the electrolyte as well. Additionally, because the sealant layer needs to completely seal the inside to prevent a material from moving between the inside and outside, the sealant layer may have high sealability. That is, the side portion 323 at which the sealant layers are adhered together may have high thermal adhesion strength. In particular, typically, poly olefin-based resin such as polypropylene or polyethylene may be used. The polypropylene has the outstanding mechanical properties such as tensile strength, stiffness, surface hardness, abrasion resistance and heat resistance and chemical properties such as corrosion resistance and may be primarily used in applications using the sealant layer.

The moisture barrier layer may be stacked between the surface protective layer and the sealant layer to ensure the mechanical strength of the battery case 320, and keep gas or moisture from entering or exiting the secondary battery B, thereby preventing leakage of the electrolyte. The moisture barrier layer may be made of metal, and in particular, the moisture barrier layer according to an embodiment of the present disclosure may be made of metal including an alloy number AA80XX aluminum alloy. The aluminum may ensure a predetermined level or more of mechanical strength, be lightweight, compensate for electrical and chemical properties by the electrode assembly 310 and the electrolyte and dissipate heat.

The surface protective layer is made of a second polymer and formed in an outermost layer to protect the secondary battery B from friction and collision with the outside and electrically insulate the electrode assembly 310 from the outside. Here, the outermost layer is the last layer in the opposite direction to the direction in which the electrode assembly 310 is located on the basis of the moisture barrier layer. In particular, in many cases, polymer having abrasion resistance and heat resistance, for example, polyethyleneterephthalate (PET) may be primarily used.

The stretch assisting layer may be made of a third polymer, and stacked between the surface protective layer and the moisture barrier layer. The stretch assisting layer may be stacked between the surface protective layer and the moisture barrier layer to prevent delamination of the surface protective layer and the moisture barrier layer when stretched. In particular, the nylon resin easily adheres to the polyethyleneterephthalate (PET) of the surface protective layer, and when stretched, exhibits similar behaviors to the aluminum alloy of the moisture barrier layer, and accordingly the nylon resin may be primarily used as the third polymer.

As shown in FIG. 1, as the pouch film is folded with respect to a reference line, the pouch films that meet each other may be symmetrical with respect to a side where they meet each other. The pouch films in symmetry may be configured such that each sealant layer included in each pouch film contacts each other. When heat is applied to the pouch films that contact each other, because the sealant layer may include the polymer, the sealant layer of each of the pouch films that contact each other may be melted and joined to each other when heated. Accordingly, the side portion 323 of the battery case 320 may be formed, and the side portion 323 may be sealed by joining the sealant layers that meet each other.

In addition, as described above, before sealing the entire side portion 323, only a part of the side portion 323 may be sealed, and the electrolyte may be injected into the electrode 311 accommodation space 100S through the unsealed part of the side portion 323. After the electrolyte is accommodated in the electrode 311 accommodation space 100S, the unsealed part of the side portion 323 may be sealed, and charging and discharging may be repeated to activate the secondary battery B. An aging process for permeation of the electrolyte into the electrode 311 may be performed at a time interval between charge and discharge. When this process is repeatedly performed, the electrical properties of the secondary battery B may be activated. During the activation process of the secondary battery B, gas may be produced inside the secondary battery B. The gas produced inside may move to the part of the side portion 323, gas located at the side portion 323 may be released through a hole, the side portion 323 close to the electrode 311 may be sealed again, and a degassing process of trimming the side portion 323 of the area in which the hole is formed may be performed. The remaining side portion 323 having a predetermined width after cutting through the degassing process may be referred to as a degassing sealing portion 324. For reference, the side portions 323 joined with the electrode lead 313 interposed between them may be referred to as a lead sealing portion 325. That is, the side portion 323 may include the degassing sealing portion 324 and the lead sealing portion 325. The degassing sealing portion 324 may be located at a side of the cup portion 321 opposite the folding portion 322, and the lead sealing portion 325 may be extended from the end portion of the degassing sealing portion 324 to the folding portion 322.

As shown in FIG. 2, the part of the side portion 323 having the predetermined width may undergo an additional process to reduce the width. This is because it is necessary to reduce the width of the side portion 323 to reduce the total width of the secondary battery B. The volumetric energy density may be increased by reducing the width of the secondary battery B.

In addition, in the foregoing description, the cup portion 321, the side portion 323, the folding portion 322, the degassing sealing portion 324 or the lead sealing portion 325 that may be included in the pouch film have used the same name as the name of the components of the battery case 320 formed based on the pouch film. One name does not indicate one component, and the names may be differently interpreted depending on the context.

The secondary battery B has been hereinabove described. Hereinafter, a battery pack BP will be described.

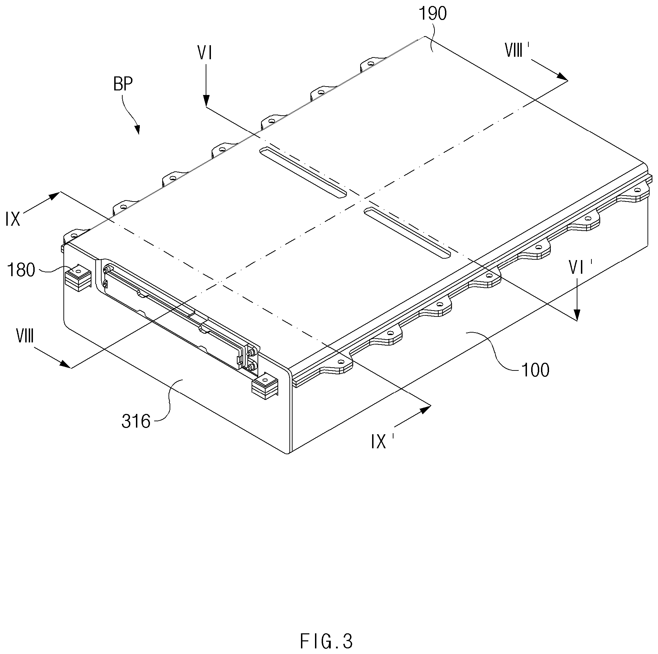

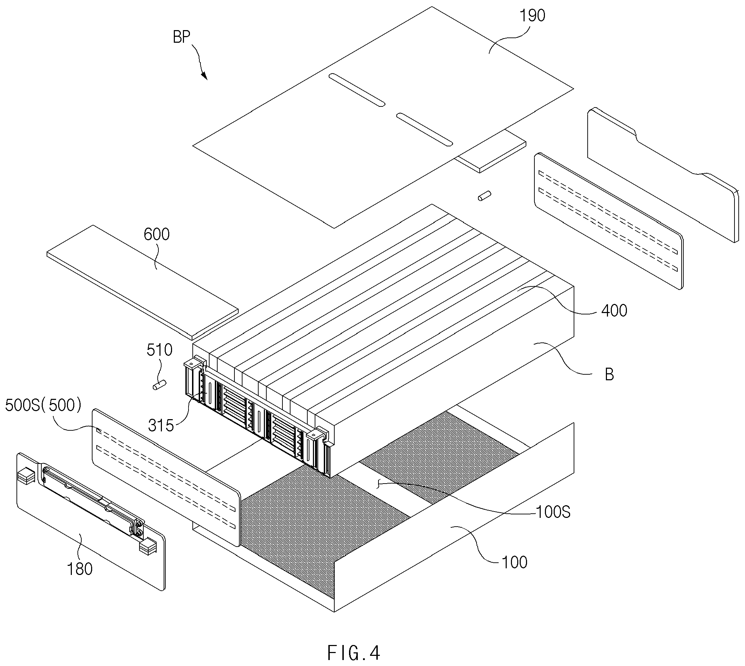

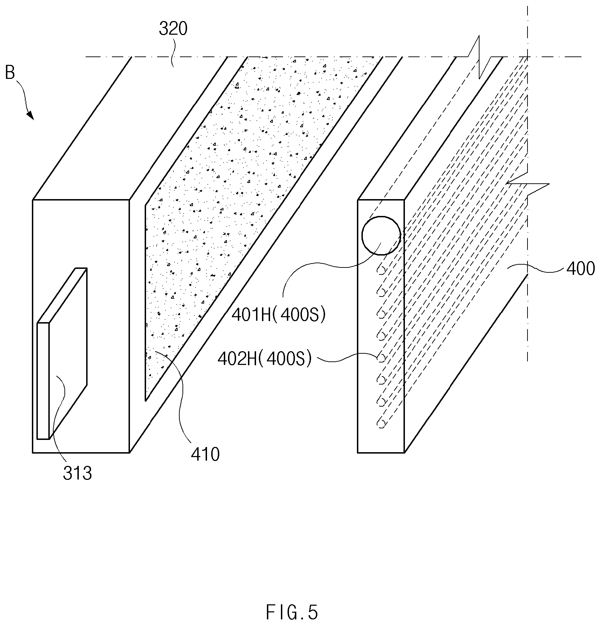

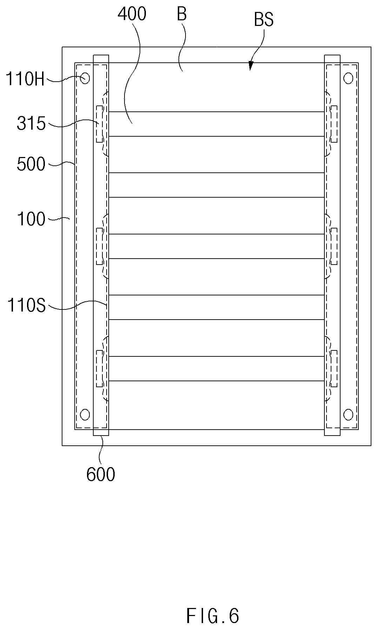

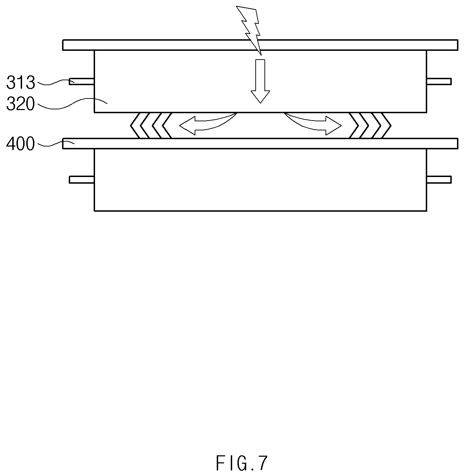

FIG. 3 is a perspective view showing the battery pack BP including the secondary battery B shown in FIG. 1. FIG. 4 is an exploded view of the battery pack BP shown in FIG. 3. FIG. 5 is an enlarged side view of a cooling plate 400 shown in FIG. 4. FIG. 6 is a cross-sectional view of the battery pack BP shown in FIG. 3, taken along µ. FIG. 7 is a conceptual diagram showing a situation in which thermal runaway occurred in one secondary battery B of a battery stack BS shown in FIG. 6.

Referring to FIGS. 3 to 7, the battery pack BP according to the first embodiment of the present disclosure will be described.

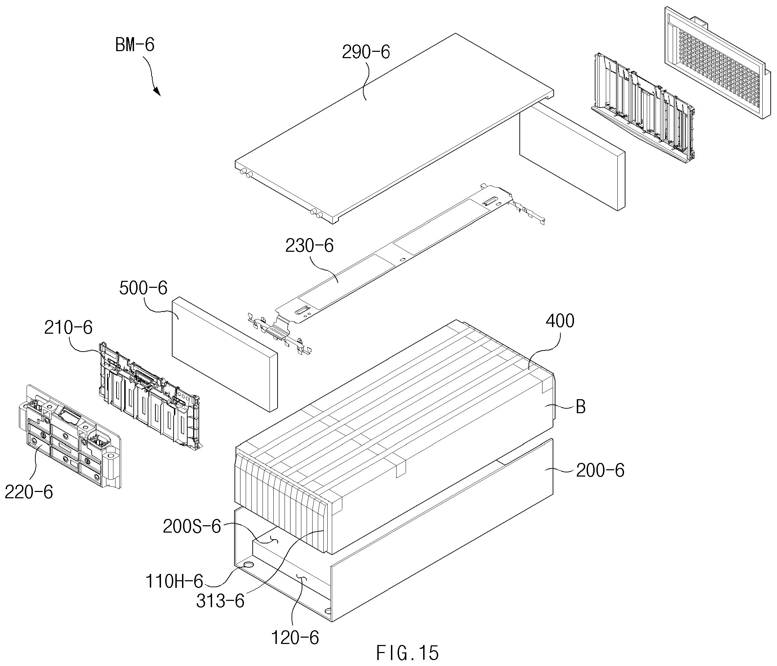

As shown in FIGS. 3 and 4, the above-described secondary battery B may be included in the battery pack BP. As shown in FIG. 15, the secondary battery B may be included in a battery module BM. A plurality of secondary batteries B may be stacked and managed for each battery module BM to easily manage the plurality of secondary batteries B. The plurality of secondary batteries B may be controlled to keep the voltage of each secondary battery B constant, to prevent thermal runaway of each of the plurality of secondary batteries B, thereby safely producing electrical energy from the plurality of secondary batteries B. Because managing the voltage of a smaller number of secondary batteries B is easier than managing the voltage of a larger number of secondary batteries B, first, the voltage of the secondary batteries B may be managed for each battery module BM, and the voltage of each battery module BM may be managed for each battery pack BP, which makes the voltage management of the battery pack BP easy. Further, when thermal runaway occurs in one of the plurality of secondary batteries B, heat may be transferred to the plurality of adjacent secondary batteries B and thermal runaway may also occur in the adjacent secondary batteries B, and when this process repeats, the thermal runaway may spread to all the adjacent secondary batteries B. To prevent the spread of thermal runaway in one secondary battery B to the entire battery pack BP, the plurality of secondary batteries B may be separated for each battery module BM, so when thermal runaway occurs in the secondary battery B included in one battery module BM, it may be possible to prevent the spread of the thermal runaway in the battery module BM to the adjacent battery module BM. Accordingly, the plurality of secondary batteries B may be managed for each battery module BM rather than each battery pack BP to prevent or delay thermal runaway.

The aspect of the present disclosure described below is directed to preventing or delaying thermal runaway in the secondary battery B, and the plurality of secondary batteries B may be first managed in the battery module BM, and subsequently, the plurality of battery modules BM may be managed for each battery pack BP, but to improve safety against thermal runaway, the secondary batteries B may directly form the battery pack BP (Cell To Pack, CTP) without forming the battery module BM. Accordingly, the following description is made with reference to FIGS. 3 to 14 on the assumption that the secondary batteries B directly form the battery pack BP without forming the battery module BM. However, the present disclosure is not limited thereto, and as shown in FIG. 15, the plurality of secondary batteries B may form the battery module BM first, and subsequently the plurality of battery modules BM may form the battery pack BP. However, it will be described in further detail in the description made with reference to FIG. 15.

First, the battery pack BP will be described.

As shown in FIG. 3, the battery pack BP may include a pack case 100. The pack case 100 may form the exterior of the battery pack BP. As shown in FIG. 4, the pack case 100 may have the accommodation space 100S for accommodating the secondary battery B. In this instance, the pack case 100 may have a lower side, and left and right sides extended upward from two ends of the lower side. The accommodation space 100S for accommodating the secondary battery B may be surrounded by the lower side, the left side and the right side of the pack case 100. In this instance, the pack case 100 may have an opening in one side, to make it easy to accommodate the secondary battery B in the accommodation space 100S. For example, as shown in FIG. 4, the opening may be formed in the upper, front and/or rear side of the pack case 100.

The battery pack BP may include a pack top plate 190 to cover the opening formed in one side of the pack case 100. For example, as shown in FIG. 4, the pack top plate 190 may cover the opening formed in the upper side of the battery pack BP. The pack top plate 190 may have a shape that conforms to the shape of the opening formed in the upper side of the pack case 100, to seal the upper side of the pack case 100. The pack top plate 190 may face the secondary battery B accommodated in the accommodation space 100S.

The battery pack BP may include a top end plate 220 to cover the opening other than the opening at which the pack top plate 190 of the pack case 100 is located. For example, the top end plate 220 may cover the opening formed in the front and/or rear side of the pack case 100 as shown in FIG. 4. The top end plate 220 may have a shape that conforms to the shape of the opening formed in the front and/or rear side of the pack case 100, to seal the front and/or rear side of the pack case 100.

The secondary battery B may be disposed such that the electrode lead 313 is located toward the top end plate 220 of the pack case 100. The plurality of secondary batteries B may be stacked and accommodated in the accommodation space 100S. The plurality of secondary batteries B may correspond to each other, facing each other, such that the electrode leads 313 face the top end plate 220. Accordingly, as the lead sealing portion 325 of the battery case 320 of the secondary battery B corresponds to the electrode lead 313, the plurality of secondary batteries B may be arranged, facing each other, such that the lead sealing portions 325 are arranged in a direction.

The battery pack BP may include a busbar 315 configured to contact the electrode lead 313 to electrically connect each secondary battery B. The busbar 315 may contact the electrode leads 313 of different secondary batteries B. For example, when each of the electrode leads 313 of the adjacent secondary batteries B is electrically connected to the busbar 315, electrical connection between the adjacent secondary batteries B may be established. In this case, the busbar 315 may contact each of the positive lead of any one secondary battery B and the negative lead of the adjacent secondary battery B. Accordingly, different secondary batteries B may be connected in series to form a higher voltage than the voltage of one secondary battery B. However, the present disclosure is not limited thereto, and the busbar 315 may be electrically connected to each of the electrode leads 313 of the secondary batteries B having the same polarity to connect the adjacent secondary batteries B in parallel. The busbar 315 may be located at the side of the secondary battery B where the electrode lead 313 is extended.

The battery pack BP may include a terminal 316 electrically connected to the busbar 315. The terminal 316 may pass through the top end plate 220 and protrude out of the top end plate 220. A component that requires electrical energy may be electrically connected to the terminal 316 and electrically connected to the secondary battery B through the busbar 315 connected to the terminal 316 so it may be supplied with necessary electrical energy from the secondary battery B.

The battery pack BP may include the cooling plate 400 between the plurality of secondary batteries B. When thermal runaway occurs in at least some of the plurality of secondary batteries B, the cooling plate 400 may be located to prevent the heat transfer to the adjacent secondary battery B. The plurality of secondary batteries B and the cooling plate 400 may form the battery stack BS.

The cooling plate 400 may contact the secondary battery B. The cooling plate 400 may have a shape corresponding to the battery case 320 of the secondary battery B. More specifically, the cooling plate 400 may contact the cup portion 321 of the battery case 320, and have a shape corresponding to the cup portion 321. The cooling plate 400 may have a larger length than the total length of the cup portion 321 along the extension direction of the cup portion 321. Accordingly, the cooling plate 400 may cover the cup portion 321.

The cooling plate 400 may include a material that insulates heat better than the secondary battery B to prevent heat transfer. Further, the cooling plate 400 may include a material having higher flame retardancy than the secondary battery B to avoid getting burned when a flame occurs in the secondary battery B. For example, the cooling plate 400 may include metal.

The cooling plate 400 will be described in further detail below.

The battery pack BP may include a thermal resin 410 between the cooling plate 400 and the secondary battery B. That is to say, the cooling plate 400 may be adhered to the secondary battery B by the thermal resin 410. In the event of local heat generation from the secondary battery B, the heavily concentrated heat may be evenly distributed by heat transfer through the thermal resin 410. Accordingly, it may be possible to prevent local heat concentration on the cooling plate 400. The thermal resin 410 may be applied to the entire surface of the cup portion 321 of the secondary battery B, but may be applied to a part of the surface of the cup portion 321 of the secondary battery B.

In particular, as shown in FIG. 5, the cooling plate 400 may have a cooling channel 400S in which a cooling medium can circulate. In the thermal runaway situation of the secondary battery B, heat may be transferred to the cooling plate 400, and the cooling plate 400 may have the cooling channel 400S to dissipate the transferred heat. The cooling channel 400S may run through the cooling plate 400. The cooling medium may move through the cooling channel 400S. The cooling medium may be water, and may be a liquid or gas having high specific heat. Further, as the cooling plate 400 has the cooling channel 400S, the temperature of the secondary battery B that contacts the cooling plate 400 may be lowered, so even in a situation in which thermal runaway does not occur in the secondary battery B, it may make temperature management of the secondary battery B easier.

The cooling channel 400S may be extended along a direction in which the cooling plate 400 is extended. The cooling channel 400S may include a connection hole 401H configured to be connected to a main cooling channel 500S as described below. The cooling channel 400S needs to be connected to the main cooling channel 500S as described below, and the main cooling channel 500S may be formed at the location that the electrode lead 313 faces to prevent the increase in height of the battery pack BP. The connection hole 401H may be formed toward a direction in which the end portion of the electrode lead 313 faces, so as to be formed toward the main cooling channel 500S. When the cooling channel 400S extended through the connection hole 401H bends, it may cause flow energy loss of the cooling medium by friction. To prevent the bend, the cooling channel 400S may be extended along the direction in which the cooling plate 400 is extended.

As shown in FIG. 5, the cooling channel 400S may further include a channel hole 402H. The channel hole 402H may have a micrometer scale diameter. When the channel hole 402H is small, a larger amount of cooling medium may be supplied to the cooling plate 400. The larger amount of cooling medium may cool the cooling plate 400 faster. However, as the connection hole 401H is the component for connection to the main cooling channel 500S, when the cooling channel 400S is connected to the main cooling channel 500S without passing through the connection hole 401H, the channel hole 402H may be formed, without forming the connection hole 401H.

As shown in FIG. 6, the battery pack BP may include the main cooling channel 500S connected to the cooling channel 400S to supply the cooling medium to the cooling channel 400S. As shown in FIG. 4, the battery pack BP may include a channel connection member 510 connecting the main cooling channel 500S to the cooling channel 400S. The channel connection member 510 may have a shape that conforms to the shape of the connection hole 401H so as to be connected to the connection hole 401H of the cooling channel 400S. The main cooling channel 500S may be formed by a main cooling line 500. The main cooling line 500 may be located at an outer position than the busbar 315 with respect to the cooling plate 400. The main cooling line 500 may be adjacent to the pack case 100. The main cooling channel 500S may be extended along the inner side of the pack case 100. The main cooling line 500 as a separate component from the pack case 100 may be extended in a direction that is different from the extension direction of the cooling plate 400. More specifically, the main cooling line 500 may be extended perpendicular to the extension direction of the cooling plate 400. The main cooling channel 500S may be extended along the extension direction of the main cooling line 500. The main cooling line 500 may include a pair of main cooling lines corresponding to the opposite end portions of the cooling plate 400. After the cooling medium enters the main cooling channel 500S formed in one of the pair of main cooling lines 500 and moves to the cooling channel 400S, the cooling medium may pass through the cooling channel 400S and leak through the other main cooling channel 500S. The main cooling channel 500S may be connected to a source of water supply (not shown), and a pump (not shown) may supply the cooling medium from the source of water supply toward the main cooling channel 500S. In addition, as described above, the main cooling channel 500S may be formed by the main cooling line 500, but is not limited thereto, and the main cooling channel 500S may be formed in the pack case 100.

As shown in FIG. 6, the cooling plate 400 may include a plurality of cooling plates along the arrangement direction of the plurality of secondary batteries B. Accordingly, when thermal runaway occurs in any one of the plurality of secondary batteries B, each of the plurality of cooling plates 400 may block the heat transfer along the arrangement direction of the plurality of secondary batteries B.

The main cooling channel 500S may be extended along the arrangement direction of the plurality of cooling plates 400. Each of the plurality of cooling plates 400 may have each cooling channel 400S. Each main cooling channel 500S connected to each cooling channel 400S may be connected, but each cooling channel 400S may be connected to one main cooling channel 500S. When the plurality of cooling channels 400S is connected to the main cooling channel 500S, the plurality of cooling channels 400S may be connected to the main cooling channel 500S in parallel.

As shown in FIG. 7, the plurality of cooling plates 400 may have a one-to-one correspondence with the plurality of secondary batteries B. That is to say, the plurality of secondary batteries B and the plurality of cooling plates 400 may be stacked in an alternating manner. Accordingly, it may be possible to prevent the spread of thermal runaway in one secondary battery B to the other secondary battery B at the early stage.

As shown in FIGS. 4 and 6, the battery pack BP may include a cover member 600 to cover the electrode lead 313 to prevent the contact of the electrode lead 313 with the pack top plate 190. The pack top plate 190 may have a coating layer on the layer of metal and having insulation properties at the side facing the electrode lead 313. In the thermal runaway situation of the secondary battery B, a part of the coating layer of the pack top plate 190 may be broken, and accordingly the layer of metal of the pack top plate 190 may contact the electrode lead 313. In particular, the electrode lead 313 and the pack top plate 190 may be located close to each other to increase the volumetric energy density of the battery pack BP, and there may be a considerable likelihood that they may contact each other. Further, as described below, in the thermal runaway situation of the secondary battery B, the electrolyte accommodated in the secondary battery B may evaporate into the gas phase and be released to the outside of the secondary battery B, and while the electrolyte gas turns back into a liquid, the electrolyte may move from above the electrode lead 313 toward the electrode lead 313 by the gravity. When the electrolyte adheres to the electrode lead 313, damage may occur to the electrode lead 313 by the reactivity of the electrolyte or electricity may not flow from the electrode lead 313 along a preset direction due to the electrical conductivity of the electrolyte. To prevent it, the cover member 600 may be necessary.

The cover member 600 may be extended in the direction in which the electrode leads 313 of each of the plurality of secondary batteries B are arranged. The width of the cover member 600 may be equal to or larger than the width of the electrode lead 313. Accordingly, the cover member 600 may cover all the electrode leads 313. Further, preferably, the electrode lead 313 as well as the busbar 315 connected to the electrode lead 313 may allow electricity to pass through, so the cover member 600 may also cover the busbar 315. Accordingly, the cover member 600 may be located between the electrode lead 313 and/or the busbar 315 and the pack top plate 190.

As described above, when thermal runaway occurs in the secondary battery B, not only heat generation but also evaporation of the electrolyte inside the secondary battery B may occur, breaking the seal of the battery case 320, and the electrolyte may be released to the outside of the secondary battery B. The contact of the electrolyte with the electrode lead 313 and/or the busbar 315 may cause a problem, and it may be necessary to collect the released electrolyte in any one place or release it out of the battery pack BP. Hereinafter, the aspect of the present disclosure will be described.

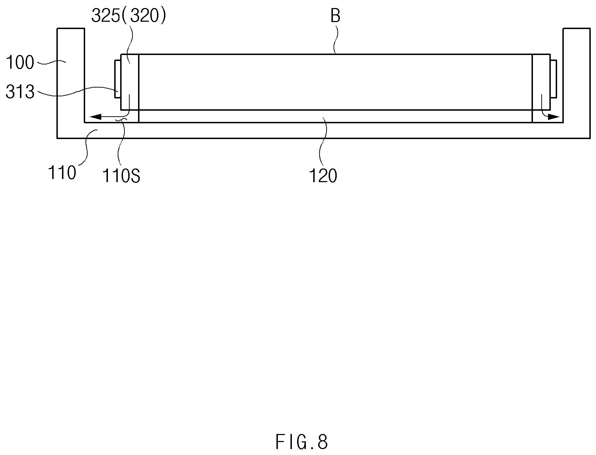

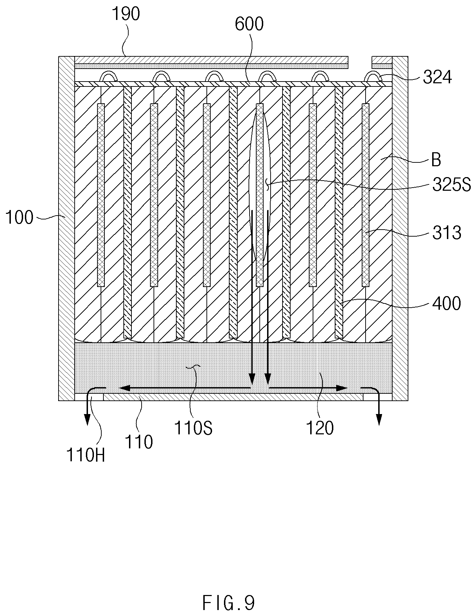

FIG. 8 is a cross-sectional view of the battery pack BP shown in FIG. 3, taken along the line VIII-VIII'. FIG. 9 is a cross-sectional view of the battery pack BP shown in FIG. 3, taken along the line IX-IX'.

Referring to FIGS. 8 and 9, a drainage channel 110S according to the first embodiment of the present disclosure will be described.

As shown in FIG. 8, the pack case 100 may include the drainage channel 110S to collect and discharge the leaking electrolyte from the secondary battery B. On the basis of the cup portion 321 of the secondary battery B, the folding portion 322 may be formed at a side, and the degassing sealing portion 324 may be formed at the opposite side to the folding portion 322. The lead sealing portions 325 sealed with the electrode lead 313 interposed between them may be formed at the side where the folding portion 322 of the cup portion 321 and the degassing sealing portion 324 are not located. Because the folding portion 322 is an unjoined portion, it is difficult to unseal, and the degassing sealing portion 324 when folded may be difficult to unseal. Accordingly, when in the event of thermal runaway in the secondary battery B, the electrolyte evaporates into a gas phase and the internal pressure increases, the seal may be unsealed at the lead sealing portion 325 where the electrode lead 313 is located, the joint is weak and folding is not carried out. Through a gap 325S formed by the unsealing of the lead sealing portion 325, the electrolyte in the gas phase may be released out of the secondary battery B. During thermal runaway in the secondary battery B, the temperature inside the secondary battery B rises, but the temperature outside the secondary battery B may be low due to slow heat transfer, the electrolyte gas released through the unsealed lead sealing portion 325 may be immediately liquefied. Accordingly, the drainage channel 110S may be adjacent to the lead sealing portion 325 to collect the liquefied electrolyte. The drainage channel 110S may recessed in a direction facing away from the lead sealing portion 325.

Further, the pack case 100 may include a drainage portion 110 configure to form the drainage channel 110S. The drainage portion 110 may be located at the outer side of the pack case 100.

As shown in FIG. 9, the drainage channel 110S may be extended along the direction in which the lead sealing portions 325 are arranged. The drainage channel 110S may be formed corresponding to each lead sealing portion 325 to collect the electrolyte upon unsealing of each of the lead sealing portions 325 of each of the plurality of secondary batteries B. The electrode lead 313 may include a pair of electrode leads at the opposite sides, respectively, and the corresponding lead sealing portion 325 may also include a pair of lead sealing portions, so the drainage channel 110S may include a pair of drainage channels corresponding to the pair of lead sealing portions 325. The pair of drainage channels 110S may be extended parallel to each other.

A drainage hole 110H may be formed adjacent to the end portion of the drainage channel 110S. The drainage hole 110H may be in communication with the outside of the pack case 100. The electrolyte moving along the drainage channel 110S may move out of the pack case 100 through the drainage hole 110H. However, the present disclosure is not limited thereto, and the drainage hole 110H may be in communication with a space for collecting the electrolyte. For example, when the secondary battery B is applied to a vehicle, discharging the electrolyte out of the vehicle may not degrade the performance of the vehicle. In this case, the drainage hole 110H may be in communication with the outside of the battery pack BP and/or the outside of the vehicle. However, when a device is not used in the outdoors like the vehicle, to prevent indoor electrolyte leakage, the drainage hole 110H may be in communication with the component having the space for collecting the electrolyte.

The drainage hole 110H is where the electrolyte is collected, and may be farthest away from the secondary battery B. Accordingly, the drainage hole 110H may be located corresponding to the inner corner of the pack case 100.

The pack case 100 may include a battery support portion 120 protruded toward the secondary batteries B to support the plurality of secondary batteries B in the gravity direction so that the lead sealing portion 325 is spaced apart from the drainage channel 110S. For example, the battery support portion 120 may be disposed below the plurality of secondary batteries B. The battery support portion 120 may be located between the pair of drainage channels 110S.

To form the drainage channel 110S adjacent to the battery support portion 120, the drainage portion 110 may be located adjacent to the battery support portion 120, and be less protruded upward than the battery support portion 120. That is, the drainage channel 110S may be formed by a height difference between the drainage portion 110 and the battery support portion 120.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

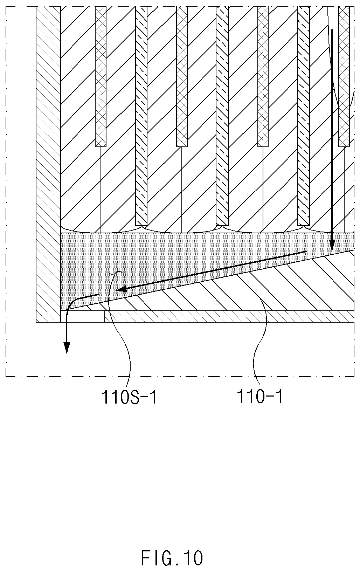

FIG. 10 is a cross-sectional view showing the battery pack BP according to a second embodiment of the present disclosure.

Referring to FIG. 10, the battery pack BP according to the second embodiment of the present disclosure will be described.

As opposed to the first embodiment, the battery pack BP according to the second embodiment has a slope in the drainage channel 110S-1. The drainage portion 110-1 of the second embodiment may be inclined toward the drainage hole 110H as it goes to the drainage hole 110H along the arrangement direction of the lead sealing portions 325. Accordingly, the electrolyte moving to the drainage channel 110S-1 may be guided to move to the drainage hole 110H. Although FIG. 10 shows the drainage channel 110S-1 having one slope, the drainage channel 110S-1 may be formed with two or more slopes or curvatures.

### Third embodiment

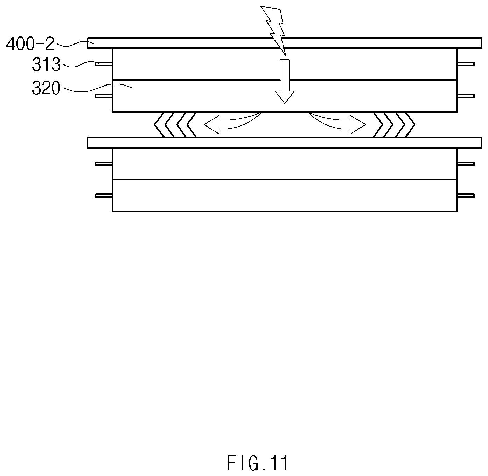

FIG. 11 is a conceptual diagram showing a situation in which thermal runaway occurred in one secondary battery B of the battery stack BS according to a third embodiment of the present disclosure.

Referring to FIG. 11, the battery stack BS according to the third embodiment of the present disclosure will be described.

The plurality of cooling plates 400-2 according to the third embodiment is different from the first embodiment in the ratio of the number of cooling plates 400-2 to the number of secondary batteries B. The plurality of cooling plates 400-2 according to the third embodiment may be stacked with the plurality of secondary batteries B at 2:1 in an alternating manner. Accordingly, two secondary batteries B may be located between two adjacent cooling plates 400-2. When thermal runaway occurs in one of the two secondary batteries B located between the two adjacent cooling plates 400-2, although it is more difficult to prevent the propagation of thermal runaway to the other secondary battery B than the first embodiment, because each of the cooling plates 400-2 contacts all the two secondary batteries B, lowering the temperature of each secondary battery B by the cooling plate 400-2 may be still applied. It may be viewed that the effect of lowering the temperature by one cooling plate 400-2 in the first embodiment is applied to one secondary battery B, while the effect of lowering the temperature by one cooling plate 400-2 in the third embodiment is applied to two secondary batteries B in contact with the cooling plate 400-2.

### Fourth embodiment

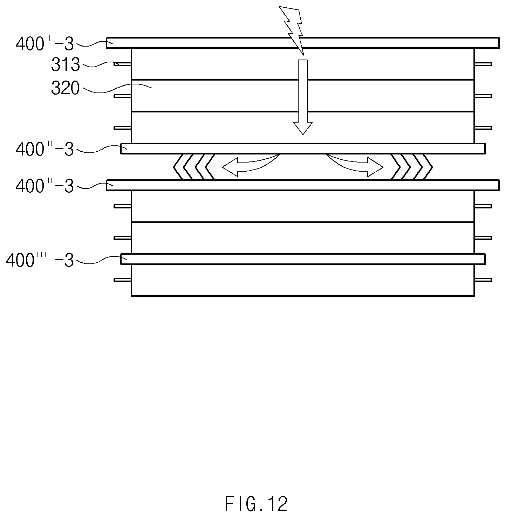

FIG. 12 is a conceptual diagram showing a situation in which thermal runaway occurred in one secondary battery B of the battery stack BS according to a fourth embodiment of the present disclosure.

Referring to FIG. 12, the battery stack BS according to the fourth embodiment of the present disclosure will be described.

The plurality of cooling plates 400 according to the fourth embodiment is different from the first embodiment in the ratio of the number of cooling plates 400 to the number of secondary batteries B. As shown in FIG. 12, the cooling plates 400-3 according to the fourth embodiment may be configured such that three secondary batteries B may be located between the first cooling plate 400'-3 and the second cooling plate 400"-3, or the number of secondary batteries B located between each of the plurality of cooling plates 400 is different, for example, the number of secondary batteries B located between the first cooling plate 400'-3 and the second cooling plate 400"-3 and the number of secondary batteries B located between the second cooling plate 400"-3 and the third cooling plate 400"'-3 or the number of secondary batteries B located between the third cooling plates 400"'-3. The number of secondary batteries B located between each of the plurality of cooling plates 400 may form a pattern, and may be randomly formed.

### Fifth embodiment

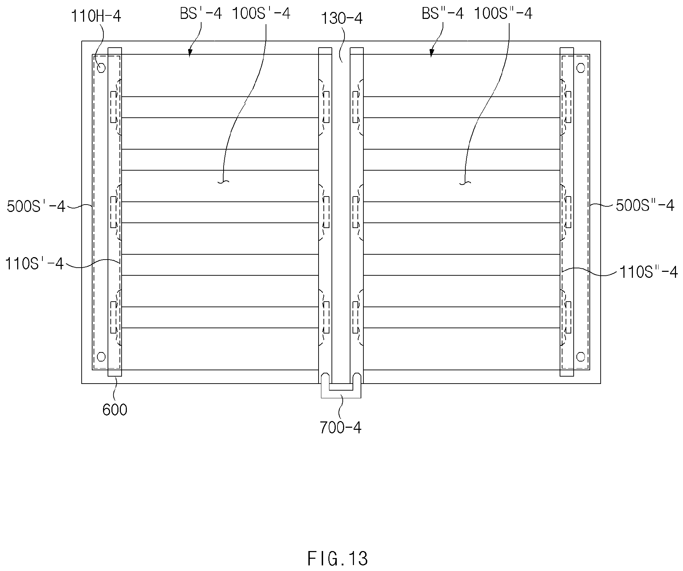

FIG. 13 is a top view of the battery pack BP according to a fifth embodiment of the present disclosure.

Referring to FIG. 13, the battery pack BP according to the fifth embodiment of the present disclosure will be described.

As opposed to the first embodiment, the battery pack BP according to the fifth embodiment may include a plurality of battery stacks BS. The battery pack BP may include a plurality of accommodation spaces 100S for accommodating the battery stacks BS.

That is, the pack case 100 may include a division frame 130-4 to divide the accommodation space 100S into a first accommodation space 100S'-4 and a second accommodation space 100S"-4.

The first accommodation space 100S'-4 may accommodate a first battery stack BS'-4, and the second accommodation space 100S"-4 may accommodate a second battery stack BS"-4. As shown in FIG. 13, the first battery stack BS'-4 and the second battery stack BS"-4 may be arranged such that the electrode leads 313 included in them face each other, and may be arranged in a direction in which each secondary battery B is stacked.

The drainage channel 110S may include a first drainage channel 110S'-4 located in first accommodation space 100S'-4 and spaced apart from the division frame 130-4, and a second drainage channel 110S"-4 located in the second accommodation space 100S"-4 and spaced apart from the division frame 130.

The main cooling channel 500S may include a first main cooling channel 500S'-4 adjacent to the first drainage channel 110S'-4 and a second main cooling channel 500S"-4 adjacent to the first drainage channel 110S'-4. As opposed to FIG. 13, the main cooling channel 500S may be additionally formed adjacent to the division frame 130-4.

The battery pack BP may include a manual spacer member 700-4 electrically connecting the plurality of secondary batteries B of the first battery stack BS'-4 to the plurality of secondary batteries B of the second battery stack BS"-4. The manual spacer member 700-4 may be separably connected to the first battery stack BS'-4 and the second battery stack BS"-4. Accordingly, to prevent the spread of thermal runaway in the secondary battery B to the other battery stack BS, the manual spacer member 700 may be manually separated from the first battery stack BS'-4 and/or the second battery stack BS"-4.

In addition, the drainage hole 110H-4 of the fifth embodiment may be formed corresponding to the corner of the pack case 100. That is to say, the drainage hole 110H-4 may not be formed at the location adjacent to the division frame 130-4. As the division frame 130-4 is where the electrode leads 313 of the first battery stack BS'-4 and the second battery stack BS"-4 face each other, the drainage hole 110H-4 adjacent to the division frame 130-4 may increase the likelihood that the electrolyte will touch the other electrode lead 313.

### Sixth embodiment

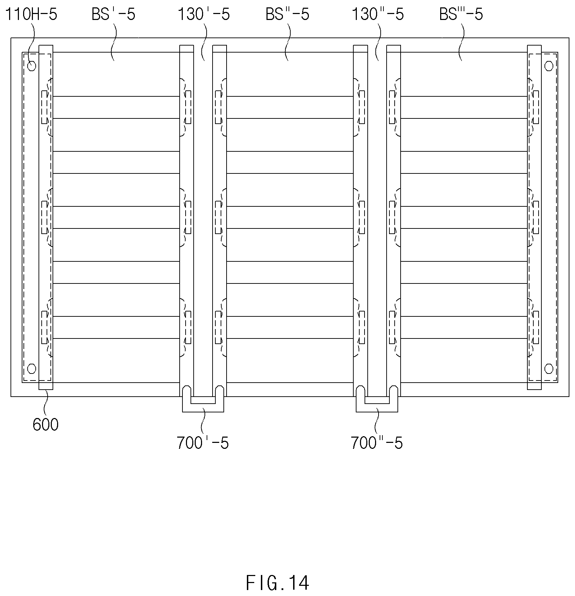

FIG. 14 is a top view of the battery pack BP according to a sixth embodiment of the present disclosure.

Referring to FIG. 14, the battery pack BP according to the sixth embodiment of the present disclosure will be described.

As opposed to the first embodiment, the battery pack BP according to the sixth embodiment includes a plurality of battery stacks BS. The battery pack BP of the sixth embodiment may include a plurality of accommodation spaces 100S for accommodating the battery stacks BS. In particular, the number of accommodation spaces 100S is different from that of the fifth embodiment.

The battery pack BP of the sixth embodiment is different from the fifth embodiment, in that the battery stack BS further includes a third battery stack BS‴-5, the manual spacer member 700 includes a first manual spacer member 700'-5 and a second manual spacer member 700"-5, and the division frame 130 includes a first division frame 130'-5 and a second division frame 130"-5.

### Seventh embodiment

FIG. 15 is an exploded view of the battery module BM-6 according to a seventh embodiment of the present disclosure.

Referring to FIG. 15, the battery module BM-6 according to the seventh embodiment of the present disclosure will be described.

The battery module BM-6 according to the seventh embodiment is different from the first embodiment in that the secondary batteries B form the battery module BM-6.

In the description of the first embodiment, the description of the pack case 100-6 may be equally applied to a module case 200-6, and the description of the pack end plate 180-6 may be equally applied to an end plate 220-6. The battery module BM-6 may include a top plate 290-6, a substrate 230-6 and/or the cooling plate 400. The busbar 315-6 of the battery module BM-6 may be supported by a busbar frame 210-6. The secondary battery B may be accommodated in a battery accommodation space of the module case 200-6. The module case 200-6 may have the drainage channel 110S-6 and the drainage hole 110H-6. The module case 200-6 may include the battery support portion 120-6.

The battery module BM-6 may include a plurality of battery modules to form the battery pack BP-6.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

BP: Battery pack
100: Pack case
100S: Accommodation space
100S': First accommodation space
100S": Second accommodation space
110: Drainage portion
110S: Drainage channel
110S'-4: First drainage channel
110S"-4: Second drainage channel
110H: Drainage hole
120: Battery support portion
130-4: Division frame
130'-5: First division frame
130"-5: Second division frame
180: Pack end plate
190: Pack top plate
BM-6: Battery module
200-6: Module case
200S-6: Battery accommodation space
210-6: Busbar frame
220-6: End plate
230-6: Substrate
290-6: Top plate
BS: Battery stack
BS'-4: First battery stack
BS"-4: Second battery stack
BS‴-5: Third battery stack
B: Secondary battery
310: Electrode assembly
311: Electrode
312 Electrode tab
313: Electrode lead
314: Insulation portion
315: Busbar
316: Terminal
320: Battery case
321: Cup portion
321S: Electrode accommodation space
322: Folding portion
323: Side portion
324: Degassing sealing portion
325: Lead sealing portion
325S: Gap
400: Cooling plate
400'-3: First cooling plate
400"-3: Second cooling plate
400‴-3: Third cooling plate
400S: Cooling channel
401H: Connection hole
402H: Channel hole
410: Thermal resin
500: Main cooling line
500S: Main cooling channel
500S'-4: First main cooling channel
500S"-4: Second main cooling channel
510: Channel connection member
600: Cover member
700: Manual spacer member
700'-4: First manual spacer member
700"-4: Second manual spacer member

## Claims

1. A battery pack comprising:
a plurality of secondary batteries including an electrode lead and a battery case including a lead sealing portion corresponding to the electrode lead, the plurality of secondary batteries arranged facing each other such that the lead sealing portions are arranged in a direction;
a cooling plate located between the plurality of secondary batteries; and
a pack case having an accommodation space for accommodating the plurality of secondary batteries, and a drainage channel adjacent to the lead sealing portions and recessed in a direction facing away from the lead sealing portions.

2. The battery pack according to claim 1,
wherein the drainage channel is extended along the direction in which the lead sealing portions are arranged.

3. The battery pack according to claim 1,
wherein the pack case has a drainage hole adjacent to an end portion of the drainage channel.

4. The battery pack according to claim 1,
wherein the pack case includes a battery support portion protruded toward the secondary batteries to support the plurality of secondary batteries in a gravity direction to place the lead sealing portions spaced apart from the drainage channel.

5. The battery pack according to claim 1,
wherein the drainage channel includes a plurality of drainage channels corresponding to the lead sealing portions each disposed at each of opposite sides.

6. The battery pack according to claim 1, further comprising:
a thermal resin located between the cooling plate and the secondary batteries.

7. The battery pack according to claim 1,
wherein the cooling plate has a cooling channel in which a cooling medium circulates.

8. The battery pack according to claim 7,
wherein the cooling channel is extended along a direction in which the cooling plate is extended.

9. The battery pack according to claim 7,
wherein the cooling plate includes a plurality of cooling plates along a direction in which the plurality of secondary batteries is arranged.

10. The battery pack according to claim 9, further comprising:
a main cooling channel connected to the cooling channel to supply the cooling medium to the cooling channel.

11. The battery pack according to claim 10,
wherein the main cooling channel is extended along a direction in which the plurality of cooling plates is arranged.

12. The battery pack according to claim 9,
wherein the plurality of cooling plates has a one-to-one correspondence with the plurality of secondary batteries.

13. The battery pack according to claim 9,
wherein the plurality of cooling plates is stacked with the plurality of secondary batteries at 2:1 in an alternating manner.

14. The battery pack according to claim 1,
wherein the pack case includes a division frame to divide the accommodation space into a first accommodation space and a second accommodation space, and
wherein the drainage channel includes:
a first drainage channel located in the first accommodation space, and spaced apart from the division frame; and
a second drainage channel located in the second accommodation space, and spaced apart from the division frame.

15. The battery pack according to claim 1, comprising:
a pack top plate located on the plurality of secondary batteries, and
further comprising:
a cover member to cover the electrode leads to prevent the electrode leads from contacting the pack top plate.

16. A battery module comprising:
a plurality of secondary batteries including an electrode lead and a battery case including a lead sealing portion corresponding to the electrode lead, the plurality of secondary batteries arranged facing each other such that the lead sealing portions are arranged in a direction; and
a module case having a battery accommodation space for accommodating the secondary batteries,
wherein the module case includes:
a drainage channel adjacent to the lead sealing portions, recessed in a direction facing away from the lead sealing portions and extended along the direction in which the lead sealing portions are arranged; and
a drainage hole adjacent to an end portion of the drainage channel.

17. The battery module according to claim 16,
wherein the module case includes a battery support portion protruded toward the secondary batteries to support the plurality of secondary batteries in a gravity direction to place the plurality of secondary batteries spaced apart from the drainage channel.

18. The battery module according to claim 16, further comprising:
a cooling plate located between the plurality of secondary batteries.

19. The battery module according to claim 18, further comprising:
a thermal resin located between the cooling plate and the secondary batteries.

20. A battery pack comprising:
a plurality of secondary batteries including an electrode lead and a battery case including a lead sealing portion corresponding to the electrode lead, the plurality of secondary batteries arranged facing each other such that the lead sealing portions are arranged in a direction; and
a pack case having an accommodation space for accommodating the plurality of secondary batteries, and a drainage channel adjacent to the lead sealing portions and recessed in a direction facing away from the lead sealing portions.
